# EUROPÄISCHE PATENTSCHRIFT

(11) **EP 0 783 246 B1**
(45) Veröffentlichungstag und Bekanntmachung des Hinweises auf die Patenterteilung: **18.11.1998**
(21) Anmeldenummer: 95934069.6
(22) Anmeldetag: 18.09.1995
(51) Int. Cl.: A01N 37/44

(54) **VERWENDUNG VON TENSIDEN ZUR STEIGERUNG DER ANTIMIKROBIELLEN WIRKSAMKEIT EINES CARBONSÄUREAMIDS**
USE OF SURFACTANTS TO BOOST THE ANTI-MICROBIAL PROPERTIES OF A CARBOXYLIC ACID AMIDE
UTILISATION DE TENSIOACTIFS EN VUE D'AUGMENTER L'ACTIVITE ANTIMICROBIENNE D'UN AMIDE D'ACIDE CARBOXYLIQUE

(30) Priorität: 26.09.1994 US 313518
(43) Veröffentlichungstag der Anmeldung: 16.07.1997
(73) Patentinhaber: Henkel Kommanditgesellschaft auf Aktien, 40191 Düsseldorf (DE)
(72) Erfinder: LEHMANN, Rudolf, D-42799 Leichlingen (DE); LEINEN, Hans-Theo, D-40229 Düsseldorf (DE); FRIESE, Carsten, D-22559 Hamburg (DE)
(86) Internationale Anmeldenummer: EP9503667
(87) Internationale Veröffentlichungsnummer: WO9609763

(56) Entgegenhaltungen:
- EP-A- 0 156 275
- WO-A-91/13965
- DE-A- 4 234 070
- DE-A- 4 314 524
- DE-A- 4 340 124

## Beschreibung

Gegenstand der vorliegenden Anmeldung ist die Verwendung von bestimmten Tensiden zur Steigerung der antimikrobiellen Wirksamkeit von Wirkstoffen mit Carbonsäureamidstruktur.

Aus der DE 34 10 956 sind antimikrobiell wirksame Substanzen bekannt, die etwa durch Umsetzen von N-substituierten Propylendiaminen der Formel R-NH-CH₂-CH₂-CH₂-NH₂, in der R für einen linearen Alkylrest mit 12 - 14 Kohlenstoffatomen steht, mit Verbindungen der Formel R₁-O-CO-CH₂-CH₂-CH-(NH₂)COOH, in der R₁ einen Alkylrest mit 1 - 4 Kohlenstoffatomen oder ein Wasserstoffatom bedeutet, wobei das molare Verhältnis der beiden Reaktionspartner 1 : 1 bis 1 : 2 beträgt, erhältlich sind. Diese Umsetzungsprodukte, die unter der Bezeichnung Glucoprotamin^{(R)} bekannt geworden sind (Hyg. Med. Vol. 17 (1992), S. 529 ff) können gegebenenfalls weiterhin mit Ethylen- oder Propylenoxid und/oder mit anorganischen oder organischen Säuren umgesetzt werden. Derartige Mittel können zur Entfaltung ihrer Wirksamkeit u.a. in Reinigungs-, Desinfektions- und Konservierungsmittel eingesetzt werden und dabei mit nichtionischen Tensiden, wie etwa Anlagerungsprodukten von 4 - 40 Mol Ethylenoxid und/oder Propylenoxid an 1 Mol Fettalkohol, Fettsäure, Fettamin, Alkylphenole und dergleichen eingesetzt werden. Die Alkoxylierungsprodukte können auch durch Veretherung mit niedermolekularen Alkoholen mit 1 bis 10 C-Atomen im Molekül "endgruppenverschlossen" sein. Entsprechendes ist auch der DE 42 34 070 zu entnehmen, wo ergänzend zu den nichtionischen Tensiden, die zwecks zusätzlicher Reinigungswirkung von Desinfektionsmitteln auf Basis von Glucoprotamin^{(R)} eingesetzt werden, auch noch Alkylpolyglucoside mit vorzugsweise 8 - 22 C-Atomen im Alkylrest genannt werden. Aus der DE 43 14 524 sind Desinfektionsmittel bekannt, die Glucoprotamin^{(R)}, als nichtionisches Tensid ein C₁₄-Alkanol, das mit 5 Mol Ethylenoxid und anschließend 4 Mol Propylenoxid umgesetzt wurde, und Diethylenglykolmonobutylether als Lösungsmittel enthalten. Entsprechendes gilt für viruswirksame Substanzen auf Basis von Glucoprotamin^{(R)}. Außer mit nichtionischen Tensiden ist Glucoprotamin^{(R)} auch noch mit Amphotensiden zusammen in reinigenden Desinfektionsmitteln eingesetzt worden. Zwar war aus der EP 185 971 die Potenzierung der mikrobiziden Wirkung von Biguaniden, insbesondere von Chlorhexidinsalzen, durch Alkylglycoside bekannt, jedoch wurde bisher nicht beobachtet, daß Tenside in Verbindung mit Glucoprotamin^{(R)} oder seinen Derivaten zu einer besonderen Wirksamkeit führen.

Überraschenderweise wurde nun gefunden, daß nichtionische Tenside und/oder Amphotenside die antimikrobielle Wirksamkeit der vorgenannten Wirkstoffe in ganz erheblichem Maße steigern.

Gegenstand der Erfindung ist daher die Verwendung von nichtionischen Tensiden und/oder Amphotensiden zur Steigerung der antimikrobiellen Wirksamkeit von Glucoprotamin^{(R)} und den daraus durch Umsetzung mit Ethylen- oder Propylenoxid und/oder mit anorganischen oder organischen Säuren gewonnenen Derivaten.

Die erfindungsgemäß beobachtete Wirksamkeitssteigerung ist umso erstaunlicher, als sehr viele anionische Tenside die Wirksamkeit des antimikrobiellen Wirkstoffs eher reduzieren oder zum Teil sogar nahezu vollständig aufheben.

Wie eingangs erwähnt sind die antimikrobiellen Wirkstoffe, deren Wirksamkeit durch die erfindungsgemäße Verwendung gesteigert wird, erhältlich durch Umsetzung von N-substituierten Propylendiaminen mit Glutaminsäure oder deren Estern. Beide Reaktionspartner werden vorzugsweise im Verhältnis 1:1 umgesetzt, wobei unter Kondensation der beiden Reaktionspartner Wasser und/oder Alkohol freigesetzt wird. Die Umsetzung kann beispielsweise bei 60 - 175 °C im Verlauf von 0,5 bis 10 Stunden in Lösungsmitteln oder gegebenenfalls auch lösungsmittelfrei durchgeführt werden. Der so erhaltene antimikrobielle Wirkstoff kann gegebenenfalls weiter mit Ethylenoxid und/oder Propylenoxid unter bekannten Alkoxylierungsbedingungen weiter umgesetzt werden und/oder gegebenenfalls weiter unter Salzbildung mit anorganischen oder organischen Säuren umgesetzt werden. Bezüglich weiterer Einzelheiten wird auf die Offenbarung der deutschen Offenlegungsschrift DE 34 10 956 verwiesen, deren Offenbarungsgehalt insofern ausdrücklich auch zur Offenbarung der vorliegenden Anmeldung gerechnet wird. Selbstverständlich sind aber die Herstellmöglichkeiten für den antimikrobiellen Wirkstoff nicht auf die in dieser Offenlegungsschrift angegebenen Verfahren beschränkt.

Bei den Tensiden, die überraschenderweise zu einer Wirksamkeitssteigerung des antimikrobiellen Wirkstoffs führen, handelt es sich um nichtionische Tenside und Amphotenside. Als nichtionische Tenside werden ganz allgemein solche oberflächenaktiven Substanzen bezeichnet, die bei Anwendungsbedingungen keine ionischen Ladungen im Molekül aufweisen. Amphotere Tenside sind hingegen oberflächenaktive Substanzen, die im Molekül sowohl eine anionische als auch eine kationische Gruppierung aufweisen, wobei diese aber, abhängig vom pH-Wert der Anwendungslösung, auch im undisoziierten Zustand vorliegen können. Bei der erfindungsgemäßen Verwendung werden die Tenside in Mengen eingesetzt, die einem Gewichtsverhältnis zum antimikrobiellen Wirkstoff von vorzugsweise 5:1 bis 1:5, insbesondere 2:1 bis 1:2 und ganz besonders bevorzugt etwa einem Gewichtsverhältnis von 1:1 entsprechen.

Als nichtionische Tenside sind insbesondere die mit 2 bis 40 Mol Ethylenoxid (EO) und gegebenenfalls zusätzlich mit Propylenoxid (PO) alkoxylierten langkettigen Verbindungen mit 8 bis 20 C-Atomen aus der Klasse der primären und sekundären Alkohole, Alkylphenole, Fettsäuren, Fettsäureamide und langkettigen Alkylamine zu erwähnen, doch sind ebenso auch die langkettigen Aminoxide und die Alkylglykoside mit einem C₈ - C₂₀-Alkylrest als nichtionische Tenside geeignet. Erfindungsgemäß besonders bevorzugt werden Alkylglykoside, die einen Alkylrest mit 8 bis 14 C-Atomen aufweisen und 1 bis 4, vorzugsweise 1 bis 2 Glucoseeinheiten im Molekül aufweisen (C₈-C₁₄-Alkylglucoside). Ebenfalls besonders bevorzugt sind für die erfindungsgemäße Verwendung die von Fettalkoholen abgeleiteten Polyalkoxylate mit 2 bis 10 Mol Ethylenoxid im Molekül, wobei vorzugsweise zusätzlich nicht mehr als 2 Mol Propylenoxid im Molekül vorhanden sein sollen. Besonders bevorzugt werden von diesen Alkoxylaten wiederum diejenigen, die sich von Fettalkoholen mit 8 bis 16 Kohlenstoffatomen im Alkylrest ableiten und die zusätzlich durch Veretherung mit C₁ - C₄-Alkanolen endgruppenverschlossen sind. Besonders bevorzugt werden ebenfalls die mit 2 bis 4 Mol Ethylenoxid umgesetzten Fettalkohole mit 8 - 14 C-Atomen.

Als amphotere Tenside (Amphotenside) eignen sich in erster Linie solche langkettigen Verbindungen, die neben einer tertiären Aminfunktion oder einer quartären Ammoniumgruppe eine Carboxylgruppe oder eine Sulfonatgruppe enthalten. Besonders bevorzugt werden Amphotenside mit Carboxylgruppen. Zur Herstellung der Amphotenside geht man üblicherweise von sekundären oder tertiären Aminen aus, die einen langkettigen Alkylrest mit vorzugsweise 10 bis 18 C-Atomen aufweisen und setzt diese Amine mit Alkylierungsmitteln um, die eine Carboxylgruppe oder eine Sulfonatgruppe aufweisen, wie beispielsweise Propansulton und insbesondere Chloressigsäure.

Zur erfindungsgemäßen Verwendung werden die Tenside entweder der anwendungsfertigen Lösung des Desinfektionswirkstoffes unmittelbar vor der Verwendung oder aber konzentrierteren Zubereitungen des Desinfektionswirkstoffes vor dem Verdünnen auf Anwendungskonzentrationen in der nötigen Menge zugesetzt. Vorzugsweise erfolgt die Verwendung in vorgefertigten Desinfektionsmitteln, die dann sowohl den antimikrobiellen Wirkstoff als auch das zur Wirksamkeitssteigerung verwendete Tensid und weitere Hilfs- und Zusatzstoffe in den richtigen Mengenverhältnissen enthalten, und die vor Anwendung gegebenenfalls noch mit Wasser verdünnt werden.

### Beispiele

### Quantitativer Suspensionstest zur Beurteilung der mikrobiziden Wirkung

### Prüfung der keimtötenden Wirkung

Durch entsprechendes Verdünnen mit Wasser wurden aus den erfindungsgemäßen Kombinationen aus Glucoprotamin^{(R)} und Tensiden Lösungen erzeugt, die die in der Tabelle angegebenen Konzentrationen an den jeweiligen Wirkstoffen enthielten. Deren antimikrobielle Wirksamkeit wurde in einem quantitativen Suspensionsversuch in Anlehnung an die Richtlinien für die Prüfung und Bewertung chemischer Desinfektionsverfahren der Deutschen Gesellschaft für Hygiene und Mikrobiologie (DGHM), Stand 1981, gegen den Bakterien-Stamm Pseudomonas aeruginosa geprüft. Dazu wurden jeweils 10 ml der in Hartwasser (17° dH) zugesetzten Wirkstoffkombination mit 0,1 ml einer Keimsuspension (ca. 10⁸ - 10⁹ Keime pro ml) bei 20 °C vermischt. Nach einer Einwirkungszeit von 5, 15, 30 und 60 Minuten wurden jeweils 1 ml dieser Mischungen in jeweils 10 ml einer wäßrigen Enthemmungslösung, enthaltend 3,0 Gew.-% Tween^{(R)} 80, 3,0 Gew.-% Saponin, 0,1 Gew.-% Histidin und 0,1 Gew.-% Cystein gegeben. Von diesen Proben und weiteren 1 : 10 Verdünnungsstufen wurden jeweils 0,1 ml auf Casein-Soja-Agarplatten aufgebracht. Nach Bebrüten dieser Subkulturen (48 Stunden bei 30 °C) wurde die Anzahl der vermehrungsfähigen Keime ermittelt. Zum Vergleich wurden wäßrige Lösungen der Einzelkomponenten und wirkstoffreies Wasser unter den gleichen Bedingungen getestet. Die Differenz zwischen Wirkstoffansatz und Negativkontrolle wird in der Tabelle als Logarithmus (= Reduktionsfaktor) angegeben.

Der Tabelle ist zu entnehmen, daß bei konzentrationsgleichem Einsatz von je 100 ppm Glucoprotamin^{(R)} und APG^{(R)} 225 oder 600 bzw. Dehydol^{(R)} LT 104 eine hervorragende Wirksamkeitssteigerung gegenüber Pseudomonas aerug. im Vergleich zu der tensidfreien Rezeptur mit 100 ppm Glucoprotamin^{(R)} erfolgt. Weitere nichtionische Tenside mit bis zu 4 Mol Ethylenoxid im Molekül zeigen bereits nach 5 Minuten Einwirkungszeit eine nicht vorhersehbare Wirksamkeitssteigerung, während Ethylenoxidaddukte mit höheren Mol-Mengen an Ethylenoxid diesen Vorteil wieder verlieren und erst bei Endgruppenverschluß durch Veretherung eine überraschende Wirksamkeitssteigerung hervorrufen. Mischalkoxylate mit Propylenoxidresten zeigen dagegen, insbesondere bei höherem PO-Gehalt, eine geringere Wirkung. Die Ergebniszahlen sind dezimale Reduktionsfaktoren, die angeben, um wieviel Zehnerpotenzen der Prüfkeim reduziert wird. Demgegenüber wird die Wirksamkeit von Glucoprotamin^{(R)} durch Zusatz von Aniontensiden, wie Texapon^{(R)} K 1296, NA-ABS und Hostapur^{(R)} SAS sowie Texapon^{(R)} K 14S70 stark reduziert bis nahezu aufgehoben. Eine deutliche Wirksamkeitssteigerung wird auch durch Amphotenside erreicht.

In der nachfolgenden Tabelle bedeuten:

| | | |
|---|---|---|
| 1. | APG^{(R)} 225 | = C₈-C₁₀-Alkylpoly(1.6)glucosid |
| 2. | APG^{(R)} 600 | = C₁₂-C₁₄-Alkylpoly(1.4)glucosid |
| 3. | Dehydol^{(R)} 04 | = C₈-Fettalkohol + 4 EO |
| 4. | Tensid A | = C₈-Fettalkohol + 1 PO + 9 EO |
| 5. | Dehydol^{(R)} D3 | = C₁₀-Fettalkohol + 3 EO |
| 6. | Tensid B | = C₁₀-C₁₄-Fettalkohol + 1 PO + 6 EO |
| 7. | Tensid C | = C₁₂-C₁₄-Fettalkohol + 2,5 EO |
| 8. | Dehydol^{(R)} LS4 | = C₁₂-C₁₄-Fettalkohol + 4 EO |
| 9. | Dehydol^{(R)} LS6 | = C₁₂-C₁₄-Fettalkohol + 6 EO |
| 10. | Dehydol^{(R)} LT 104 | = C₁₂-C₁₄-Fettalkoholpoly(9-10 EO)glykolbutylether |
| 11. | Dehypon^{(R)} LS 54 | = C₁₂-C₁₄-Fettalkohol + 5 EO + 4 PO |
| 12. | Dehyton^{(R)} G | = N-Hydroxyethyl-N-cocosalkylamidoethylcarboxymethylglycinat |
| 13. | Texapon^{(R)} K 14S70 | = Na-Laurylmyristylethersulfat |
| 14. | Texapon^{(R)} K 1296 | = Na-Laurylsulfat |
| 15. | Texapon^{(R)} SB3 | = Na-Sulfosuccinat |
| 16. | Na-ABS | = Na-C₉-C₁₃-Alkylbenzolsulfonat |
| 17. | Hostapur^{(R)} SAS60 | = sec. C₉-C₁₃-Alkansulfonat |

- EO: = Mol Ethylenoxid
- PO: = Mol Propylenoxid
Die reinen Tenside zeigten alle ohne Glucoprotamin^{(R)} bei 100 ppm noch keine mikrobizide Wirkung.

### Ergebnisse quantitativer Suspensionstest

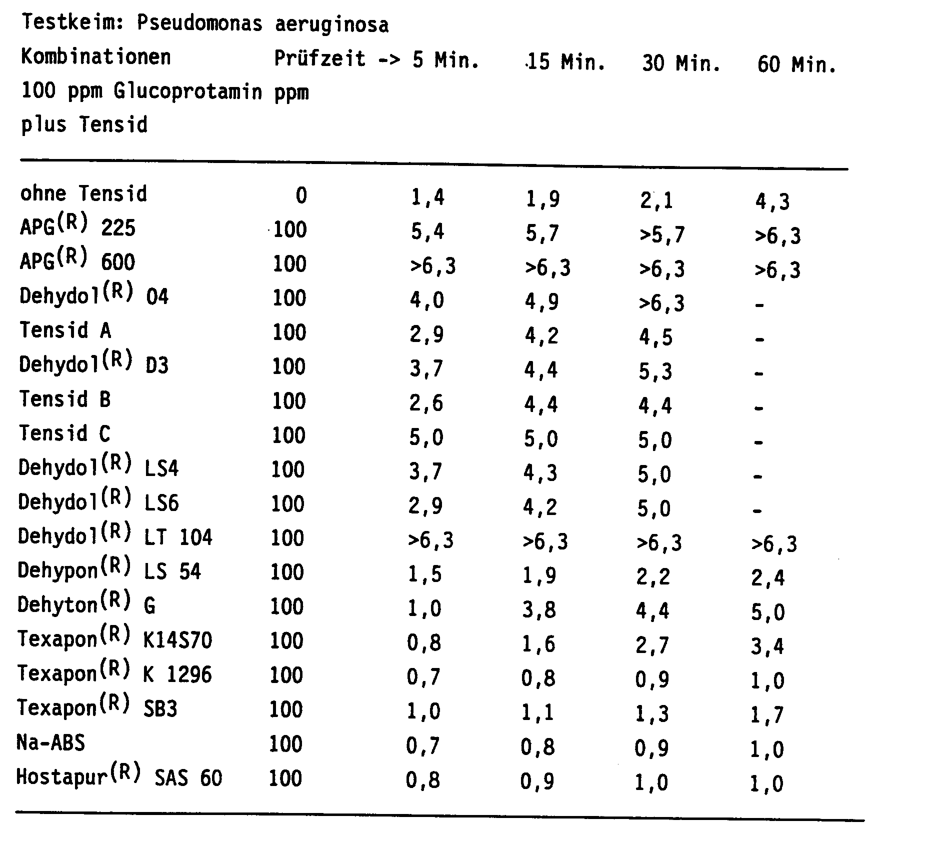

## Patentansprüche

1. Verwendung von nichtionischen oder amphoteren Tensiden zur Steigerung der antimikrobiellen Wirksamkeit eines antimikrobiellen Wirkstoffs, der durch Umsetzen von N-substituierten Propylendiaminen der Formel R-NH-CH₂-CH₂-CH₂-NH₂, in der R für einen linearen Alkylrest mit 12 bis 14 C-Atomen steht, mit Verbindungen der Formel R₁-O-CO-CH₂-CH₂-CH-(NH₂)-COOH, in der R₁ einen Alkylrest mit 1 bis 4 C-Atomen oder ein Wasserstoffatom bedeutet, wobei das molare Verhältnis der beiden Reaktionspartner 1:1 bis 1:2 beträgt, und gegebenenfalls weitere Umsetzung des Kondensationsprodukt mit Ehtylen- oder Propylenoxid und/oder mit anorganischen oder organischen Säuren erhältlich ist.

2. Verwendung von Tensiden nach Anspruch 1 durch Zusatz der Tenside zu dem in Anspruch 1 genannten antimikrobiellen Wirkstoff im Gewichtsverhältnis von 5:1 bis 1:5, vorzugsweise von 2:1 bis 1:2.

3. Verwendung nach einem der Ansprüche 1 oder 2, wobei als Tenside nichtionische Tenside eingesetzt werden.

4. Verwendung nach einem der Ansprüche 1 bis 3 von Fettalkoholpolyethoxylaten oder -propoxylaten oder Mischethern, wobei die Alkylkettenlänge des Fettalkoholrestes 8 bis 16 C-Atome, vorzugsweise 8 bis 14 C-Atome, die Zahl der Ethylenoxidgruppen 1 bis 10, vorzugsweise 1 bis 4, und die Zahl der zusätzlichen Propylenoxidgruppen nicht mehr als 2 betragen soll, und die Fettalkoholpolyethoxylate und/oder -propoxylate gegbenenfalls durch Veretherung mit C₁ - C₄-Alkanolen endgruppenverschlossen sein können.

5. Verwendung von C₁₂ - C₁₄-Fettalkoholpoly (9-10 EO) glykolbutylether in der Verwendung nach Anspruch 4.

6. Verwendung nach einem der Ansprüche 1 bis 3, wobei als nichtionische Tenside Alkylglycoside mit einem C₈ - C₂₀-Alkylrest eingesetzt werden.

7. Verwendung von C₈ - C₁₄-Alkylglucosiden in der Verwendung nach Anspruch 6.

8. Verwendung von C₈ - C₁₀-Alkylpoly(1,6)glucosid und/oder C₁₂ - C₁₄-Alkylpoly(1,4)glucosid in der Verwendung nach Anspruch 7.

9. Verwendung nach einem der Ansprüche 1 oder 2, wobei als Tenside Amphotenside eingesetzt werden.

10. Verwendung von N-Hydroxyethyl-N-cocosalkylamidoethylcarboxymethylglycinat in der Verwendung nach Anspruch 9.

11. Verwendung nach einem der Ansprüche 1 bis 10 bei der Bekämpfung von Pseudomonas aeruginosa.

## Claims

1. The use of nonionic or amphoteric surfactants for increasing the antimicrobial activity of an antimicrobial agent obtainable by reaction of N-substituted propylenediamines corresponding to the formula R-NH-CH₂-CH₂-CH₂-NH₂, where R is a linear alkyl group containing 12 to 14 carbon atoms, with compounds corresponding to the formula R₁-O-CO-CH₂-CH₂-CH-(NH₂)-COOH, where R₁ is an alkyl group containing 1 to 4 carbon atoms or a hydrogen atom, the molar ratio between the two reactants being 1:1 to 1:2, and optionally further reaction of the condensation product with ethylene or propylene oxide and/or with inorganic or organic acids.

2. The use of surfactants as claimed in claim 1 by addition of the surfactants to the antimicrobial agent mentioned in claim 1 in a ratio by weight of 5:1 to 1:5 and preferably 2:1 to 1:2.

3. The use claimed in claim 1 or 2, the surfactants used being nonionic surfactants.

4. The use claimed in any of claims 1 to 3 of fatty alcohol polyethoxylates or propoxylates or mixed ethers, the alkyl chain length of the fatty alcohol radical being 8 to 16 carbon atoms and preferably 8 to 14 carbon atoms, the number of ethylene oxide groups being 1 to 10 and preferably 1 to 4 and the number of additional propylene oxide groups being no more than 2 and the fatty alcohol polyethoxylates and/or propoxylates optionally being end-capped by etherification with C₁₋₄ alkanols.

5. The use of C₁₂₋₁₄ fatty alcohol poly (9-10 EO) glycol butyl ether in the use claimed in claim 4.

6. The use claimed in any of claims 1 to 3, the nonionic surfactants used being alkyl glycosides containing a C₈₋₂₀ alkyl group.

7. The use of C₈₋₁₄ alkyl glucosides in the use claimed in claim 6.

8. The use of C₈₋₁₀ alkyl poly(1.6)glucoside and/or C₁₂₋₁₄ alkyl poly(1.4)-glucoside in the use claimed in claim 7.

9. The use claimed in claim 1 or 2, the surfactants used being amphoteric surfactants.

10. The use of N-hydroxyethyl-N-cocoalkylamidoethyl carboxymethyl glycinate in the use claimed in claim 9

11. The use claimed in any of claims 1 to 10 against Pseudomonas aeruginosa.

## Revendications

1. Utilisation de tensioactifs non ioniques ou amphotères en vue d'augmenter l'activité antimicrobienne d'une substance active antimicrobienne, qui est obtenable en faisant réagir des propylènediamines N-substituées de la formule R-NH-CH₂-CH₂-CH₂-NH₂, dans laquelle R représente un radical alkyle linéaire comportant 12 à 14 atomes de carbone, avec des composés de la formule R₁-O-CO-CH₂-CH₂-CH-(NH₂)COOH, dans laquelle R¹ représente un radical alkyle comportant 1 à 4 atomes de carbone ou un atome d'hydrogène, les deux partenaires réactionnels étant entre eux dans un rapport molaire de 1:1 a 1:2, et en faisant encore réagir, le cas échéant, le produit de condensation avec de l'oxyde d'éthylène ou de propylène et/ou avec des acides inorganiques ou organiques.

2. Utilisation de tensioactifs selon la revendication 1 par addition de ceux-ci à la substance active antimicrobienne citée dans la revendication 1, dans un rapport pondéral de 5:1 à 1:5, de préférence de 2:1 à 1:2.

3. Utilisation selon une des revendications 1 ou 2, en mettant en oeuvre comme surfactifs, des tensioactifs non ioniques.

4. Utilisation selon une des revendications 1 à 3, de polyéthoxylates ou de polypropoxylates d'alcools gras, ou d'éthers mixtes, la longueur de chaîne alkyle du radical d'alcool gras devant atteindre 8 à 16 atomes de C, de préférence 8 à 14 atomes de C, le nombre des groupes d'oxyde d'éthylène devant s'élever à 1 à 10, de préférence à 1 à 4, et le nombre des groupes d'oxyde de propylène supplémentaires ne devant pas dépasser 2, les polyéthoxylates et/ou les polypropoxylates d'alcools gras pouvant également être fermés au niveau du groupe terminal par éthérification avec des alcanols en C₁-C₄.

5. Utilisation de poly(9-10 EO)glycolbutyléthers d'alcools gras en C₁₂-C₁₄ dans la mise en oeuvre selon la revendication 4.

6. Utilisation selon une des revendications 1 à 3, des alkylglycosides avec un radical alkyle en C₈-C₂₀ étant mis en oeuvre comme tensioactifs non ioniques.

7. Utilisation d'alkylglucosides en C₈-C₁₄ dans la mise en oeuvre selon la revendication 6.

8. Utilisation d'alkyl(en C₈-C₁₀)poly(1,6)glucoside et ou d'alkyl(en C₁₂-C₁₄)poly(1,4)glucoside dans la mise en oeuvre selon la revendication 7.

9. Utilisation selon une des revendications 1 ou 2, des surfactifs amphotéres étant utilisés comme tensioactifs.

10. Utilisation de N-hydroxyéthyl-N-alkylamide de cocoéthylcarboxyméthylglycinate dans la mise en oeuvre selon la revendication 9.

11. Utilisation selon une des revendications 1 à 10, dans la lutte contre Pseudomonas aeruginosa.
